# EUROPÄISCHE PATENTANMELDUNG

(11) **EP 2 333 324 A2**
(43) Veröffentlichungstag der Anmeldung: **15.06.2011**
(21) Anmeldenummer: 10013962.5
(22) Anmeldetag: 26.10.2010
(51) Int. Cl.: F03D 9/00

(54) **Windkraftanlage zur Erzeugung von elektrischer Energie in einem Kraftfahrzeug**

(30) Priorität: 14.12.2009 DE 102009058242
(71) Anmelder: Schilling, Martin, 33609 Bielefeld (DE)
(72) Erfinder: Schilling, Martin, 33609 Bielefeld (DE)
(74) Vertreter: Brandt, Detlef

(57) **Zusammenfassung**

Es wird eine Windkraftanlage zur Erzeugung von elektrischer Energie in einem Kraftfahrzeug durch Anströmung mindestens einer in einem Kanalraum (2) angeordneten Generatoreinheit (1) durch bei Bewegung des Kraftfahrzeuges erzeugten Fahrtwind, vorgestellt, bei der erfindungsgemäß in Anströmrichtung vor der Generatoreinheit (1) ein Luftleitblechelement (9, 12, 19) angeordnet ist, welches eine Regulierung der Fahrtwindanströmung (4) bis hin zu einer Nichtanströmung der Generatoreinheit (1) in Abhängigkeit von der Fahrgeschwindigkeit des Fahrzeuges ermöglicht.

## Beschreibung

### Technisches Umfeld

Die Erfindung betrifft eine Windkraftanlage zur Erzeugung von elektrischer Energie in einem Kraftfahrzeug durch Anströmung mindestens einer in einem Kanalraum angeordneten Generatoreinheit.

### Stand der Technik

Windkraftanlagen der eingangs geschilderten Art sind seit nunmehr mehr als einem Jahrzehnt zumindest theoretisch in der Kraftfahrtzeugtechnik bekannt. Die Windkraftanlagen sollen insbesondere bei so genannten Hybridfahrzeugen, bei denen ein Verbrennungsmotor und ein Elektromotor gemeinsam oder einzeln für den Vortrieb eines Kraftfahrzeuges Verwendung finden, die Rechweite des Fahrzeuges erweitern, da insbesondere bei Verwendung des Elektromotors durch die beschränkte Energiekapazität der für die Speisung des Motors notwendigen Akkumulatoren die bereitgestellte Energie begrenzt ist.

Darüber hinaus können Windkraftanlagen natürlich auch allein mit fossilen Brennstoffen betriebenen Kraftfahrzeugen herkömmlicher Art zur ergänzenden Bereitstellung von elektrischer Energie dienen, um zum einen den verwendeten Verbrennungsmotor von dieser Aufgabe zu entbinden oder bei Verwendung zahlreicher elektrischer Verbraucher im Fahrzeug zusätzliche Energie bereitzustellen, ohne dass Rückgriffe auf den im Fahrzeug üblicherweise vorhandenen Akku notwendig sind.

Im Zusammenhang mit den geschilderten Verwendungsmöglichkeiten sind beispielsweise aus der DE 33 41 514 A1 ein Windflächengenerator für ein Kraftfahrzeug bekannt, welcher mit einer waagerecht liegenden Rotationsachse ausgestattet ist, wobei dem Windflächengenerator jeweils ein feststehendes Windleitblech zur Verbesserung des Wirkungsgrades zugeordnet ist.

Darüber hinaus sind aus der BE 10 12 351 und der DE 10 2007 054 789 A1 in allgemeiner Form mit einer waagerechten Rotationsachse liegend verwendete Windgeneratoren zur Verwendung in Kraftfahrtzeugen offenbart. Mit der durch den Fahrtwind erzeugten elektrischen Energie soll der Antrieb des Fahrzeuges und / oder von Nebenaggregaten unterstützt werden.

Aus der DE 20 2008 010 396 U1 ist darüber hinaus eine Windkraftanlage bekannt, welche hinsichtlich ihrer Rotationsachse waagerecht oder senkrecht angeordnet werden kann. Die Windkraftanlage verfügt über einen trichterförmigen Windeinlass und einzelnen Rotorblättern jeweils zugeordnete feste Luftleitbleche. Verwendung kann eine derartige Windkraftanlage außer in Kraftfahrzeugen beispielsweise auf Schiffen finden.

Die zu den bislang beschriebenen Windkraftanlagen gehörenden Generatoreinheiten zur Erzeugung der gewünschten elektrischen Energie können unterschiedliche Ausführungsvarianten haben. Allen Varianten ist gemeinsam, dass insbesondere der Verwendung der Generatoreinheiten in Personenkraftwagen die mit diesen Fahrzeugen erzielten hohen Geschwindigkeiten für die Gesamtkonstruktion derartiger Generatoreinheiten nur durch eine konstruktiv anspruchsvolle Gestaltung Rechnung getragen werden kann. Eine derartige Gestaltung ist naturgemäß mit nicht unerheblichen finanziellen Aufwendungen verbunden, was die Kosten des Gesamtfahrzeuges anhebt und es für viele potenzielle Nutzer unattraktiv macht.

### Aufgabe der Erfindung

Aufgabe der vorliegenden Erfindung ist es daher, eine Windkraftanlage der eingangs geschilderten Art so weiter zu entwickeln, dass ein konstruktiv einfacher Aufbau mit preiswert am Markt verfügbaren Bauelementen insbesondere für die Generatoreinheit verwirklicht werden kann. Eine derartige Windkraftanlage soll selbstverständlich in allen Personen- und Nutzkraftfahrtzeugen unter Berücksichtigung einer wünschenswert hohen Lebensdauer einsetzbar sein.

### Lösung der Aufgabe

Die geschilderte Aufgabe wird für eine Windkraftanlage zur Erzeugung von elektrischer Energie in einem Kraftfahrzeug durch die im Anspruch 1 dargelegte technische Lehre gelöst.

Erfindungswesentlich dabei ist es , dass durch Anströmung mindestens einer in einem kanalförmigen Raum angeordneter Generatoreinheit bei Bewegung des Kraftfahrzeuges erzeugten Fahrtwind elektrische Energie erzeugt wird, wobei in Anströmrichtung vor der Generatoreinheit ein Luftleitblechelement angeordnet ist, welches eine Regulierung der Fahrtwindanströmung bis hin zu einer Nichtanströmung der Generatoreinheit in Abhängigkeit von der Höhe der Fahrgeschwindigkeit des Fahrzeuges ermöglicht.

Durch die geschilderte technische Lehre kann die Generatoreinheit als wesentliches Element der Windkraftanlage insbesondere bei höheren Geschwindigkeiten von der dabei auftretenden intensiven Fahrtwindanströmung teilweise oder gänzlich abgekoppelt werden. Darüber hinaus ermöglicht die Regulierung der Fahrtwindanströmung in Folge des erfindungsgemäßen Luftleitblechelementes eine gleichmäßige Beanspruchung der Generatoreinheit, was deren Lebensdauer naturgemäß zugute kommt.

In Folge der Regulierung der Fahrtwindanströmung können nunmehr insbesondere bei Personenkraftfahrzeugen preiswerte Generatoreinheiten verbaut werden, die im unteren und mittleren Geschwindigkeitsbereich bis zu einer Geschwindigkeit von ungefähr 80 Kilometern problemlos arbeiten, deren konstruktiv bedingte Festigkeit der Einzelelemente jedoch bei höheren Geschwindigkeiten an ihre Grenzen stößt, so dass ein Ausfall oder eine gänzliche Zerstörung der Generatoreinheit vermieden wird.

Andererseits können durch die Regulierung der Fahrtwindanströmung Generatoreinheiten verwendet werden, die insbesondere bei niedrigen Geschwindigkeiten im Bereich von 0 - 60 Kilometern pro Stunde und somit bei den im Stadtverkehr üblichen Geschwindigkeiten eine optimalen Wirkungsgrad erreichen. Somit kann insbesondere bei langsamer Fahrt und der Benutzung zahlreicher elektrischer Verbraucher wie Klimakompressoren, Beleuchtung, Entertainment- und Informationsgeräten wie Stereoanlagen, Navigationsgeräten oder Geräten für den Zugang zum Internet eine Überbeanspruchung des normalen, motorseitig betriebenen Kraftfahrzeuggenerators sowie der zum Bordnetz gehörenden Autobatterie vermieden werden.

Besondere Ausgestaltungen des Gegenstandes der Erfindung ergeben sich ergänzend zur technischen Lehre des Anspruches 1 zusätzlich aus den Merkmalen der auf den Anspruch 1 rückbezogenen Unteransprüche.

Als günstige Generatoreinheit zur Verwendung in der erfindungsgemäßen Windkraftanlage hat sich insbesondere die Verwendung eines Satoriusrotors bewährt. Diese Bauform besitzt einen hohen Wirkungsgrad und ist kostengünstig am Markt verfügbar, wobei bereits entsprechende Lebensdaueruntersuchungen auch für die langjährige Verwendung in Kraftfahrzeugen vorliegen. Da ein Satoriusrotor jedoch beispielsweise Fahrtwindanströmungen im Bereich oberhalb von 80 Kilometern pro Stunde nicht verkraftet, bildet die neue technische Lehre der Windkraftanlage hier die Möglichkeit, dieses hervorragend geeignete Bauteil in Kraftfahrzeugen einzusetzen.

Es hat sich darüber hinaus als vorteilhaft erwiesen, wenn in Anströmrichtung vor dem Luftleitblechelement ein Zuführtrichter für den Fahrtwind in den Kanalraum angeordnet ist. Hierdurch wird der Wirkungsgrad aller verwendeten Generatoreinheiten insbesondere im niedrigeren Geschwindigkeitsbereich verbessert, wobei durch die Regulierung der Fahrtwindanströmung Beschädigungen oder eine Zerstörung der Generatoreinheiten bei höheren Geschwindigkeiten zuverlässig ausgeschlossen werden kann.

Eine besondere Ausgestaltungsvariante des Luftleitblechelementes sieht vor, dass dieses als gekrümmtes Leitschaufelteil ausgebildet ist, das um eine seitlich der Generatoreinheit angeordnete, zur Längsachse der Generatoreinheit parallele Achse bewegbar ist. Durch diesen Aufbau kann eine Platz sparende Gesamtbaueinheit der Windkraftanlage realisiert werden.

Zusätzlich vorteilhaft kann es darüber hinaus sein, die Drehachse an dem der Generatoreinheit zugewandten Ende des Leitschaufelteiles anzuordnen. Diese Gestaltung ermöglicht eine preiswerte Antriebseinheit zur Drehung des Leitschaufelteiles. Ist das als Leitschaufelteil ausgebildete Luftleitblechelement bei höheren Geschwindigkeiten so ausgerichtet, dass eine Nichtanströmung der Generatoreinheit im Kanalraum gewährleistet ist, so kann es darüber hinaus vorteilhaft sein, dass der Fahrtwind durch das Luftleitblechelement in einen Ableitkanal geführt wird. Dieser Ableitkanal kann beispielsweise direkt neben dem Kanalraum der Generatoreinheit angeordnet sein, was wiederum eine kompakte Gesamtbaueinheit gewährleistet. Die in den Ableitkanal eingeführte Luft kann durch konstruktive Massnahmen innerhalb des Fahrzeuges so geführt werden, dass sie zur Kühlung vorhandener Akkus zur Energiespeicherung genutzt werden kann.

Darüber hinaus besteht die Möglichkeit einer zweckmäßigen Weiterbildung darin, dass Luftleitblechelement als translatorisch bewegliche, rechtwinklig zur Längsachse des Kanalraumes angeordnete Sperrjalousie auszugestalten, die den Querschnitt des Kanalraumes, in welcher der Generatoreinheit angeordnet ist, verkleinern kann bis hin zum völligen Verschluss des Querschnittes. Diese konstruktive Ausgestaltung bildet eine alternative Lösung der technischen Lehre und kann abhängig von den Anbauerfordernissen am Kraftfahrzeug Verwendung finden.

Um die Bauform der Sperrjalousie zusätzlich zu verkleinern, kann diese entsprechend einer zweckmäßigen Weiterbildung zweiteilig ausgestaltet sein, wobei die Sperrjalousieteile von zwei Seiten in den Querschnitt des Kanalraumes bewegbar sind. Die zweiteilige Ausgestaltung bietet darüber hinaus zusätzlich die Möglichkeit einer relativ schnellen Verkleinerung und Vergrößerung des Querschnittsbereiches des Kanalraumes, so dass eine feinfühlige Regulierung der Fahrtwindanströmung erfolgen kann.

Hinsichtlich des Einsatzes der erfindungsgemäßen Windkraftanlage mit den bislang geschilderten Ausgestaltungsvarianten ist anzumerken, dass sie beispielsweise im Frontspoilerbereich eines Kraftfahrzeuges angeordnet sein kann. Darüber hinaus besteht die Möglichkeit, dass eine derartige Windkraftanlage Bestandteil einer Dachspoilereinheit eines Lastkraftwagens ist, wobei das Luftleitblechelement als in das Spoilerelement einklappbares Jalousieelement gestaltet sein kann.

Auf diese Weise bildet das Spoilerelement bei Abschottung der Generatoreinheit in Folge erhöhter Geschwindigkeiten die Vorzüge der Krafteinsparung wie bei üblichen Spoileretementen auch, wobei festzuhalten ist, dass der Wirkungsgrad derartiger Spoilerelemente insbesondere bei höheren Geschwindigkeiten zu entsprechenden Kraftstoffeinsparungen führt.

Denkbar ist auch der Einsatz von erfindungsgemässen Windkraftanlagen in Aufsatzcontainern von Lastkraftwagen.

### Figurenbeschreibung

Im Folgenden werden verschiedene Ausführungsbeispiele des Gegenstandes der Erfindung anhand der beigefügten Zeichnungen näher erläutert. Hierbei zeigt:
- Fig. 1: eine schematische Darstellung eines ersten Ausführungsbeispieles der Erfindung bei angeströmter Generatoreinheit,
- Fig. 2: die Ausgestaltungsvariante der Figur 1 bei nichtangeströmter Generator- einheit,
- Fig. 3: eine zweite Ausgestaltungsvariante der Windkraftanlage,
- Fig. 4: die Frontansicht eines Kraftfahrzeuges mit darin eingebauten erfindungs- gemäßen Windkraftanlagen und
- Fig.5: eine Teilansicht eines Lastkraftwagens im Bereich des oberhalb des Führerhauses angeordneten Spoilerelementes.

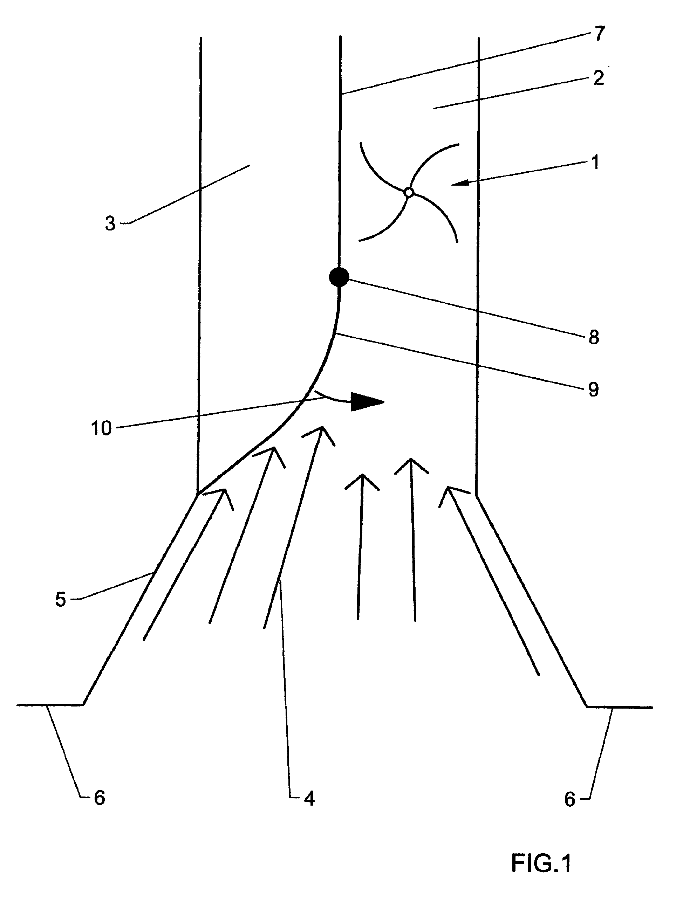

Die in der Figur 1 dargestellte erste Ausgestaltungsvariante einer erfindungsgemäßen Windkraftanlage besteht im Wesentlichen aus einer Generatoreinheit 1, die in der Figur 1 durch eine Schaufelradanordnung dargestellt ist. Zur Generatoreinheit 1 gehören selbstverständlich weitere Bauelemente wie Gehäuse und elektronische Schaltelemente, die aus dem Stand der Technik jedoch hinreichend bekannt sind und auf deren Darstellung in diesem Falle aus Gründen der Übersichtlichkeit verzichtet wurde.

Die Generatoreinheit 1 ist in einem Kanalraum 2 angeordnet, dessen Querschnitt an die Ausführungsvariante der verwendeten Generatoreinheit 1 angepasst ist. Neben dem Kanalraum 2 befindet sich ein Ableitkanal 3, dessen Vorhandensein für die Fälle benötigt wird, in der die Generatoreinheit 1 auf Grund der durch die Pfeile 4 dargestellten Fahrtwindanströmung gefährdet ist. Die Fahrtwindanströmung 4 erfolgt von der Frontseite des Fahrzeuges durch einen Zuführtrichter 5. An den Zuführtrichter 5 schließt sich aussen, der Generatoreinheit 1 abgewandt schematisch dargestellt eine Spoilerwandung 6 an, in der eine Aussparung für den Zuführtrichter eingearbeitet ist.

Die Generatoreinheit 1 kann entsprechend einer vorteilhaften Ausgestaltung als Satoriusrotor ausgebildet sein, der insbesondere bei Geschwindigkeiten des Kraftfahrzeuges bis 80 Kilometern pro Stunde einen hohen Wirkungsgrad aufweist. In der Wandung 7 zwischen dem Kanalraum 2 und dem Ableitkanal 3 befindet sich in Fahrtwindanströmrichtung vor der Generatoreinheit 1 eine Drehachse 8, an der drehbar ein Leitschaufelteil 9 festgelegt ist. Das Leitschaufelteil 9 ist gekrümmt ausgeführt und durch entsprechende nicht näher dargestellte Antriebselemente bewegbar.

In der Darstellung der Figur 1 befindet sich das Leitschaufelteil 9 in derjenigen Stellung, in der die volle Fahrtwindanströmung 4 in den Kanalraum 2 geleitet wird, so dass die Generatoreinheit 1 ihre volle Arbeit zur Erzeugung der elektrischen Energie leisten kann. Die Spitze des Leitschaufelteiles 9 befindet sich dabei an der Außenwandung des Ableitkanals 3 angelegt. Ergibt eine Geschwindigkeitsüberwachung des Fahrzeuges, dass die in Folge der Bewegung des Fahrzeuges erzeugte Fahrtwindanströmung 4 zu groß wird, so wird das Leitschaufelteil 9 als Luftleitblechelement in Richtung des Pfeils 10 gedreht, so dass ein Teil der Fahrtwindanströmung 4 nicht mehr in den Kanalraum 2 eindringen kann, sondern über den Ableitkanal 3 an der Windkraftanlage vorbeigeleitet wird.

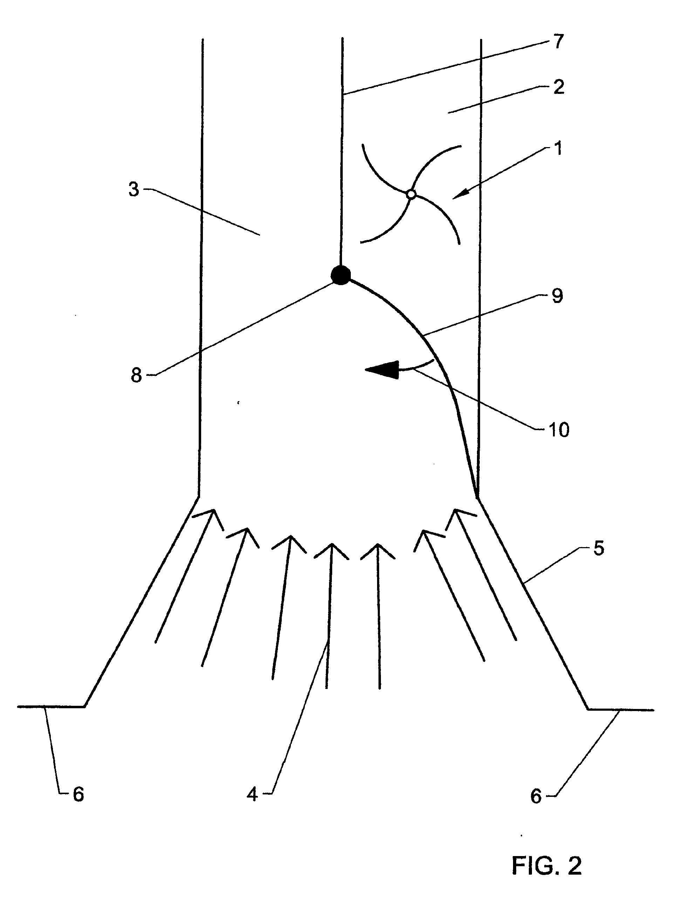

Die Funktionsweise des Leitschaufelteiles 9 wird ergänzend aus der Figur 2 deutlich. In dieser Figur befindet sich das Kraftfahrzeug in einem so hohen Geschwindigkeitsbereich, dass die Fahrtwindanströmung 4 insgesamt zu einer Beschädigung der Generatoreinheit 1 führen könnte. Aus diesem Grunde ist das Leitschaufelteil 9 in diesem Falle an die Außenwandung des Kanalraumes 2 angelehnt, so dass der Querschnitt des Kanalraumes 2 vollkommen geschlossen ist. Durch die Krümmung der Leitschaufel 9 wird gewährleistet, dass die Strömungsverhältnisse innerhalb des Zuführtrichters 5 und des Übergangsbereiches zum Ableitkanal 3 strömungsgünstig ausgeformt sind.

Verlangsamt das Fahrzeug wieder seine Geschwindigkeit, so führt die daraus resultierende kleinere Fahrtwindanströmung 4 zu einer Öffnung des Leitschaufelteiles 9 in Richtung des Pfeiles 11 in der Figur 2.

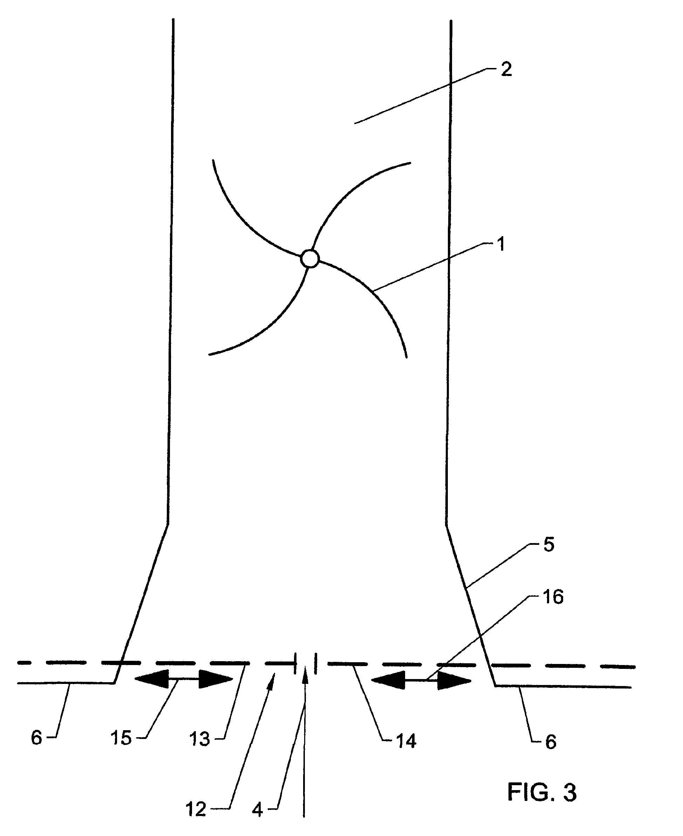

Im Ausführungsbeispiel der Figur 3 ist ebenfalls in einem Kanalraum 2 eine Generatoreinheit 1 angeordnet, die wiederum schematisch als Schaufelanordnung dargestellt ist. Vor dem Kanalraum 2 befindet sich wie im ersten Ausgestaltungsbeispiel eine Zuführtrichter 5. Der Zuführtrichter 5 ist wiederum an seiner der Generatoreinheit 1 abgewandten größeren Öffnungsseite in eine Spoilerwandung 6 eingearbeitet.

Im Bereich der Öffnung des Zuführtrichters 5 in der Spoilerwandung 6 befindet sich schematisch dargestellt eine Sperrjalousie 12, die rechtwinklig zur Längsachse des Kanalraumes 2 angeordnet ist. Die Sperrjalousie 12 besteht aus zwei Sperrjalousieteile 13 und 14, die entsprechend der Doppelpfeile 15 und 16 translatorisch bewegbar sind. Die Bewegung der Sperrjalousie 12 und 13 bewirkt eine Verkleinerung oder Vergrößerung der Querschnittsöffnung des Zuführtrichters 5. Sind die Sperrjalousieteile 13 und 14 in der in Figur 3 dargestellten Position, gelangt nur noch ein sehr kleiner Teil der Fahrtwindanströmung 4 durch die zwischen den freien Enden der Sperrjalousieteile 13 und 14 bestehenden Öffnung.

Dies bedeutet, dass sich das dazugehörige Kraftfahrzeug in einem Geschwindigkeitsbereich befindet, bei dem die gesamte Fahrtwindanströmung 4 unter Umständen zu einer Beschädigung der Generatoreinheit 1 führen würde. Bremst das Fahrzeug ab, werden in Folge der Geschwindigkeitsüberwachung des Fahrzeuges die Sperrjalousieteile 13 und 14 geöffnet, so dass sich der Abstand der freien Enden vergrößert und somit ein größerer Teil der Fahrtwindanströmung 4 in den Kanalraum 2 eintreten kann.

Selbstverständlich ist es auch möglich, die Sperrjalousie 12 erst am Beginn des Kanalraumes 2 hinter dem Zuführtrichter 5 zu platzieren. Die detaillierte Bauanordnung der erfindungsgemäßen Bauteile hängt wesentlich von der Gesamtgeometrie des Fahrzeuges und den verwendeten Einzelkomponenten ab, so dass im Rahmen der Erfindungsbeschreibung nur die durch die schematische Figur 3 dargestellte Gesamtfunktion erläutert wird.

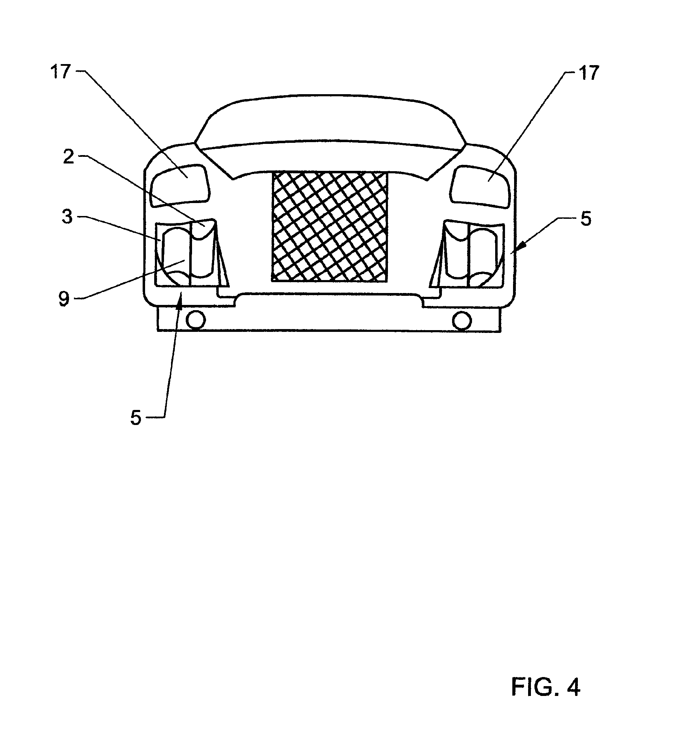

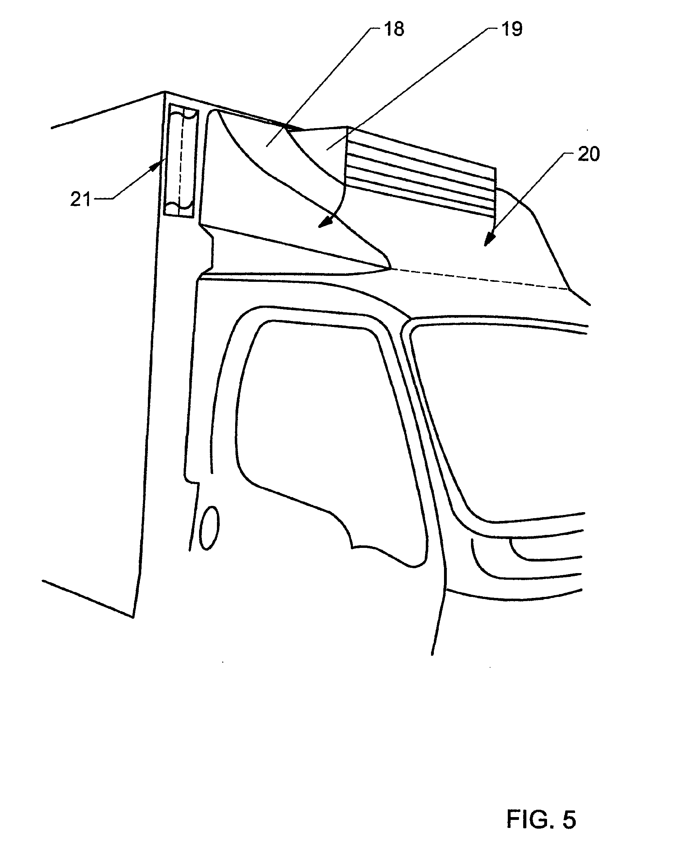

In den Figuren 4 und 5 sind Ausführungsbeispiele der Erfindung in ihrer Anwendung bei einem PKW (Figur 4) bzw. einem LKW (Figur 5) dargestellt. Die Figur 4 zeigt dabei, die Frontansicht eines Sportwagens, bei dem unterhalb der Scheinwerfer 17 jeweils ein Zuführtrichter 5 sichtbar ist. Dieser Zuführtrichter 5 bildet den Zugang sowohl zum Kanalraum 2 als auch zum Ableitkanal 3, wobei schematisch das erfindungsgemäße Luftleitblechelement in Form eines Leitschaufelteiles 9 sowohl in der geschlossenen als auch geöffneten Position des Leitschaufelteiles 9 dargestellt ist. Die geöffnete Position ist dabei in Volllinie ausgeführt, wohingegen die zum Schutz der Generatoreinheit 1 notwendige geschlossene Position des Kanalraumes 2 gestrichelt dargestellt ist.

In der Figur 5 ist eine erfindungsgemäße Windkraftanlage in ein Spoilerelement 18 auf dem Führerhaus eines LKW eingebaut. Sowohl die Generatoreinheit 1 als auch der Kanalraum 2 befinden sich dabei - in der Figur 5 nicht näher dargestellt - im Inneren des Spoilerelementes 18. Zur Regulierung des Fahrtwindanströmung auf die Generatoreinheit 1 ist in das Spoilerelement 18 ein Luftleitblechelement 19 drehbar eingebaut. Das Luftleitelement 19 kann entsprechend der Pfeile 20 in der Figur 5 in das Spoilerelement eingefahren werden, so dass die Oberseite des Luftleitelementes 19 eine plane Oberfläche mit der Außenseite des Spoilerelementes 18 bildet. In dieser Position kann der LKW mit größerer Geschwindigkeit fahren, ohne dass eine Beschädigung der im Innern befindlichen Generatoreinheit 1 in Folge einer zu großen Fahrtwindanströmung erfolgt.

Fährt des LKW mit geringerer Geschwindigkeit, so wird durch geeignete Antriebselemente das Luftleitelement 19, welches an seiner Außenseite mit einer Jalousie versehen sein kann, ausgefahren, so dass die Fahrtwindanströmung in das Innere des Spoilers und hier zur Generatoreinheit 1 für die Erzeugung von elektrischer Energie gelangen kann.

Aus der Figur 5 ist zusätzlich ersichtlich, dass neben der zentral im Spoilerelement 18 angeordneten Windkraftanlage natürlich auch neben dem Spoilerelement weitere erfindungsgemäße Windkraftanlagen 21 ähnlich denjenigen aus der Figur 4 angeordnet werden können. Die Anordnung hängt konstruktiv von den Gesamtgegebenheiten der LKW- Front ab, die Darstellung soll an dieser Stelle einen Eindruck von der möglichen Verwendung der erfindungsgemäßen Windkraftanlage geben wobei eine derartige Windkraftanlage 21 natürlich auch Bestandteil eines Aufsatzcontainers für Nutzfahrzeuge sein kann.

Bezugszeichnungsliste
- 1: Generatoreinheit
- 2: Kanalraum
- 3: Ableitkanal
- 4: Fahrtwindanströmung
- 5: Zuführtrichter
- 6: Spoilerwandung
- 7: Wandung
- 8: Drehachse
- 9: Leitschaufel
- 10: Pfeil
- 11: Pfeil
- 12: Sperrjalousie
- 13: Sperrjalousieteil
- 14: Sperjalousieteil
- 15: Pfeil
- 16: Pfeil
- 17: Scheinwerfer
- 18: Spoilerelement
- 19: Luftleitelement
- 20: Pfeil
- 21: Windkraftanlage (Aufsatzcontainereinbau)

## Patentansprüche

1. Windkraftanlage zur Erzeugung von elektrischer Energie in einem Kraftfahrzeug durch Anströmung mindestens einer in einem Kanalraum (2) angeordneten Generatoreinheit (1) durch bei Bewegung des Kraftfahrzeuges erzeugten Fahrtwind, wobei in Anströmrichtung vor der Generatoreinheit (1) ein Luftleitblechelement (9, 12, 19) angeordnet ist, welches eine Regulierung der Fahrtwindanströmung (4) bis hin zu einer Nichtanströmung der Generatoreinheit (1) in Abhängigkeit von der Fahrgeschwindigkeit des Fahrzeuges ermöglicht.

2. Windkraftantage nach Anspruch 1,
**dadurch gekennzeichnet, dass**
die Generatoreinheit (1) einen Satoriusmotor aufweist.

3. Windkraftanlage nach Anspruch1 oder 2,
**dadurch gekennzeichnet, dass**
in Anströmrichtung vor dem Luftleitblechelement (9,12, 19) ein Zuführtrichter (5) für den Fahrtwind in den Kanalraum (2) angeordnet ist.

4. Windkraftanlage nach Anspruch1 bis 3,
**dadurch gekennzeichnet, dass**
das Luftleitblechelement als gekrümmtes Leitschaufelteil (9) ausgebildet ist, das um eine seitlich der Generatoreinheit (1) angeordnete, zur Längsachse der Generatoreinheit (1) parallele Drehachse (8) bewegbar ist.

5. Windkraftanlage nach Anspruch 4,
**dadurch gekennzeichnet, dass**
die Drehachse (8) an dem der Generatoreinheit (1) zugeordneten Ende des Leitschaufelteiles (9) angeordnet ist.

6. Windkraftanlage nach Anspruch1 bis 5,
**dadurch gekennzeichnet, dass**
das Luftleitblechelement (9) den Fahrtwind bei Nichtanströmung der Generatoreinheit (1) in einem Ableitkanal (3) einführt.

7. Windkraftanlage nach Anspruch1 bis 3,
**dadurch gekennzeichnet, dass**
das Luftleitblechelement als rechtwinklig zur Längsachse des Kanalraumes (2) angeordnete, translatorisch bewegliche Sperrjalousie (12) ausgestaltet ist, die den Querschnitt des Kanalraumes (2), in welcher die Generatoreinheit (1) angeordnet ist, verkleinern kann bis hin zur Nichtanströmung der Generatoreinheit (1).

8. Windkraftanlage nach Anspruch 7,
**dadurch gekennzeichnet, dass**
die Sperrjalousie (12) zweiteilig ausgestattet ist, wobei die Sperrjalousieteile (13, 14) von zwei Seiten in dem Querschnitt des Kanalraumes (2) bewegbar sind.

9. Windkraftanlage nach Anspruch 1 bis 8,
**dadurch gekennzeichnet, dass**
sie im Frontspoilerbereich eines Kraftfahrzeuges angeordnet ist.

10. Windkraftanlage nach Anspruch 1 bis 9,
**dadurch gekennzeichnet, dass**
sie Bestandteil einer Dachspoilereinheit eines Lastkraftwagens ist, wobei das Luftleitblechelement als in das Spoilerelement einklappbares Jalousieelement ausgestaltet ist.
